# EUROPEAN PATENT APPLICATION

(11) **EP 4 579 404 A1**
(43) Date of publication of application: **02.07.2025**
(21) Application number: 23870662.6
(22) Date of filing: 23.09.2023
(51) Int. Cl.: G06F 3/041

(54) **TOUCH PROCESSING METHOD AND RELATED DEVICE**

(30) Priority: 30.09.2022 CN 202211225758
(71) Applicant: Huawei Technologies Co., Ltd., Shenzhen, Guangdong 518129 (CN)
(72) Inventor: TAN, Zhengbin, Shenzhen, Guangdong 518129 (CN); WANG, Xing, Shenzhen, Guangdong 518129 (CN)
(74) Representative: Gill Jennings & Every LLP
(86) International application number: PCT/CN2023/120903
(87) International publication number: WO 2024/067431

(57) **Abstract**

This application discloses a touch processing method and a related device. An electronic device (for example, a mobile phone) may include a camera and a low-power processor (for example, a microprocessor). The camera may collect image data. The low-power processor may perform face detection based on the image data collected by the camera, to obtain a face detection result. After receiving a touch event, the low-power processor may determine, based on the face detection result, whether to respond to the touch event. If the low-power processor responds to the touch event, the electronic device in a screen-off state may retain the screen-off state, or the electronic device in a screen-on state may ignore the touch event and execute a normal screen-off procedure based on a screen sleep setting policy. In this way, a problem of a mistouch on a screen can be resolved with extremely low power consumption, to prolong a battery life of the electronic device and reduce power consumption, thereby improving user experience.

## Description

This application claims priority to Chinese Patent Application No. 202211225758.6, filed with the China National Intellectual Property Administration on September 30, 2022 and entitled "TOUCH PROCESSING METHOD AND RELATED DEVICE", which is incorporated herein by reference in its entirety.

### TECHNICAL FIELD

This application relates to the field of terminal technologies, and in particular, to a touch processing method and a related device.

### BACKGROUND

With the development of terminal technologies, currently, many electronic devices (such as a mobile phone and a tablet) are provided with touchscreens. During actual use of these electronic devices with the touchscreens, mistouch events often occur on the touchscreens. For example, when the mobile phone is placed in a pocket or placed under an energized conductor, mistouch events on a touchscreen cause frequent screen-on of the electronic device, reducing a normal battery life of the electronic device.

### SUMMARY

Embodiments of this application provide a touch processing method and a related device, to implement a mistouch prevention function of an electronic device, and reduce power consumption of the electronic device.

According to a first aspect, an embodiment of this application provides an electronic device. The electronic device includes a camera and a microprocessor. The camera is connected to the microprocessor. The camera is configured to capture a first image. The microprocessor is configured to receive a first touch event. The microprocessor is further configured to: generate a first face detection result based on the first image, and determine, based on the first face detection result, whether the microprocessor responds to the first touch event.

By use of the electronic device provided in the first aspect, a problem of a mistouch on a screen can be resolved with extremely low power consumption, to prolong a battery life of the electronic device and reduce power consumption, thereby improving user experience.

In a possible implementation, the microprocessor is specifically configured to: receive the first touch event when the electronic device is in a screen-off state, and when it is determined, based on the first face detection result, that the microprocessor does not respond to the first touch event, the electronic device retains the screen-off state.

In this way, when it is determined that the microprocessor does not respond to the first touch event, the electronic device in the screen-off state may consider that the first touch event is a mistouch event, and the electronic device does not execute a screen-on procedure, and retains the screen-off state, thereby implementing a mistouch prevention function, prolonging a battery life of the electronic device, and reducing power consumption.

In a possible implementation, the electronic device further includes a main processor and a touch sensor. The touch sensor is configured to send information about the first touch event to the main processor; the main processor is configured to receive the information that is about the first touch event and that is sent by the touch sensor, and send the information about the first touch event to the microprocessor; and the microprocessor is specifically configured to receive the information that is about the first touch event and that is sent by the main processor. Alternatively, the touch sensor is configured to send information about the first touch event to the microprocessor; and the microprocessor is specifically configured to receive the information that is about the first touch event and that is sent by the touch sensor.

In one manner, the microprocessor obtains the information about the first touch event by using the main processor. In another manner, the microprocessor directly obtains the information about the first touch event by using the touch sensor (for example, when the microprocessor is connected to the touch sensor, the microprocessor may directly obtain the information about the first touch event in this manner). In this way, after obtaining the information about the first touch event, the microprocessor may perform a subsequent step to determine whether to respond to the first touch event.

In a possible implementation, one or more modules are deployed on the microprocessor, and the one or more modules include a face detection module, a mistouch detection module, and a screen control module. The face detection module is configured to generate the first face detection result based on the first image. The mistouch detection module is configured to: obtain the first face detection result from the face detection module, and determine, based on the first face detection result, whether the screen control module responds to the first touch event. The mistouch detection module is further configured to send a first message to the screen control module, where the first message indicates the screen control module to respond to or not to respond to the first touch event. The screen control module is configured to: receive the first message, and respond to or skip responding to the first touch event based on the first message.

In a possible implementation, the face detection module includes a detection module and a camera control module. The detection module is configured to generate and store the first face detection result based on the first image. The camera control module is configured to set a working mode of the camera, and the working mode of the camera includes an ultra-low power ULP mode.

In this way, the face detection module may not only perform face detection, but also control the camera.

In a possible implementation, that the mistouch detection module is configured to determine, based on the first face detection result, whether the screen control module responds to the first touch event specifically includes: The mistouch detection module determines whether the first face detection result meets one or more of the following first conditions. If the first face detection result meets one or more of the following first conditions, the mistouch detection module determines that the screen control module does not respond to the first touch event, or if the first face detection result does not meet one or more of the following first conditions, the mistouch detection module determines that the screen control module responds to the first touch event. The first condition includes: There is no face, a face size is less than a first preset size, face stay duration is less than first preset duration, a face orientation deviates from a first preset angle range, or a distance between a face and a screen of the electronic device is greater than or equal to a first preset distance.

In this way, in one manner, when the face detection result indicates no face is present, the electronic device determines not to respond to the first touch event (that is, considers that the first touch event is a mistouch event). To improve accuracy of mistouch detection, in another manner, when the face detection result indicates no face is present, the electronic device may further determine whether the face detection result meets more other conditions (for example, a face size less than a first preset size, face stay duration less than first preset duration, a face orientation deviating from a first preset angle range, or a distance between a face and a screen of the electronic device being greater than or equal to a first preset distance). If the face detection result meets more other conditions, the electronic device determines not to respond to the first touch event (that is, considers that the first touch event is a mistouch event).

In a possible implementation, an image signal processing module is further deployed on the microprocessor. The image signal processing module is configured to: preprocess the first image to obtain a preprocessed first image, and send the preprocessed first image to the face detection module. The face detection module is specifically configured to: receive the preprocessed first image sent by the image signal processing module, and generate the first face detection result based on the preprocessed first image.

In this way, when the first image captured by the camera cannot be directly used for face detection, the image signal processing module may preprocess the image and then face detection is performed.

In a possible implementation, the camera is connected to the microprocessor through a mobile industry processor interface MIPI.

In this way, the camera and the microprocessor may communicate with each other through the MIPI.

According to a second aspect, an embodiment of this application provides a touch processing method, applied to an electronic device. The electronic device includes a camera and a microprocessor. The camera is connected to the microprocessor. The method includes: The camera captures a first image; and the microprocessor receives a first touch event, generates a first face detection result based on the first image, and determines, based on the first face detection result, whether the microprocessor responds to the first touch event.

According to the method provided in the second aspect, the electronic device may collect image data, and may perform face detection based on the collected image data to obtain a face detection result. After receiving a touch event, the electronic device may determine, based on the face detection result, whether the touch event is a mistouch event. If the touch event is a mistouch event, the electronic device may not respond to the touch event. In this way, a problem of a mistouch on a screen can be resolved with extremely low power consumption, to prolong a battery life of the electronic device and reduce power consumption, thereby improving user experience.

In a possible implementation, the electronic device receives the first touch event when the electronic device is in a screen-off state, and after it is determined, based on the first face detection result, that the microprocessor does not respond to the first touch event, the electronic device retains the screen-off state.

In a possible implementation, the electronic device further includes a main processor and a touch sensor. That the microprocessor receives a first touch event specifically includes: The touch sensor sends information about the first touch event to the main processor; the main processor receives the information that is about the first touch event and that is sent by the touch sensor, and sends the information about the first touch event to the microprocessor; and the microprocessor receives the information that is about the first touch event and that is sent by the main processor. Alternatively, that the microprocessor receives a first touch event specifically includes: The touch sensor sends information about the first touch event to the microprocessor; and the microprocessor receives the information that is about the first touch event and that is sent by the touch sensor.

In a possible implementation, one or more modules are deployed on the microprocessor, and the one or more modules include a face detection module, a mistouch detection module, and a screen control module. That the microprocessor generates a first face detection result based on the first image specifically includes: The face detection module generates the first face detection result based on the first image. That the microprocessor determines, based on the first face detection result, whether the microprocessor responds to the first touch event specifically includes: The mistouch detection module determines, based on the first face detection result, whether the screen control module responds to the first touch event, and sends a first message to the screen control module, where the first message indicates the screen control module to respond to or not respond to the first touch event, and the screen control module receives the first message, and responds to or skips responding to the first touch event based on the first message.

In a possible implementation, the face detection module includes a detection module and a camera control module. The detection module is configured to generate and store the first face detection result based on the first image. The camera control module is configured to set a working mode of the camera, and the working mode of the camera includes an ultra-low power ULP mode.

In a possible implementation, that the microprocessor determines, based on the first face detection result, whether the microprocessor responds to the first touch event specifically includes: The microprocessor determines whether the first face detection result meets one or more of the following first conditions. If the first face detection result meets one or more of the following first conditions, the microprocessor determines that the microprocessor does not respond to the first touch event, or if the first face detection result does not meet one or more of the following first conditions, the microprocessor determines that the microprocessor responds to the first touch event. The first condition includes: There is no face, a face size is less than a first preset size, face stay duration is less than first preset duration, a face orientation deviates from a first preset angle range, or a distance between a face and a screen of the electronic device is greater than or equal to a first preset distance.

In a possible implementation, an image signal processing module is further deployed on the microprocessor. The image signal processing module is configured to: preprocess the first image to obtain a preprocessed first image, and send the preprocessed first image to the face detection module. That the face detection module generates the first face detection result based on the first image specifically includes: The face detection module generates the first face detection result based on the preprocessed first image.

In a possible implementation, the camera is connected to the microprocessor through a mobile industry processor interface MIPI.

According to a third aspect, an embodiment of this application provides a computer storage medium. The computer storage medium stores a computer program, and the computer program includes program instructions. When the program instructions are run on an electronic device, the electronic device is enabled to perform the method in any possible implementation of the second aspect.

According to a fourth aspect, an embodiment of this application provides a computer program product. When the computer program product is run on a computer, the computer is enabled to perform the method in any possible implementation of the second aspect.

### BRIEF DESCRIPTION OF DRAWINGS

FIG. 1 is a diagram of processing policies for a screen mistouch event in a scenario in which an electronic device 100 is in a screen-off state and in a scenario in which the electronic device 100 is in a screen-on state according to an embodiment of this application;
FIG. 2 is a diagram of a structure of an electronic device 100 according to an embodiment of this application;
FIG. 3 is a diagram of a structure of a face detection module 112 shown in FIG. 2 according to an embodiment of this application;
FIG. 4 is a schematic flowchart of determining, by a mistouch detection module of an electronic device 100, whether a touch event is a mistouch event according to an embodiment of this application;
FIG. 5 is a schematic flowchart of implementing a touch processing method in a scenario in which an electronic device 100 is in a screen-off state according to an embodiment of this application;
FIG. 6 is a schematic flowchart of implementing a touch processing method in a scenario in which an electronic device 100 is in a screen-on state according to an embodiment of this application;
FIG. 7A to FIG. 7D are another schematic flowchart of implementing a touch processing method in a scenario in which an electronic device 100 is in a screen-off state according to an embodiment of this application; and
FIG. 8A to FIG. 8D are another schematic flowchart of implementing a touch processing method in a scenario in which an electronic device 100 is in a screen-on state according to an embodiment of this application.

### DESCRIPTION OF EMBODIMENTS

The following clearly and completely describes the technical solutions in embodiments of this application with reference to the accompanying drawings in embodiments of this application. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

It should be understood that the terms "first", "second", and the like in this specification, the claims, and the accompanying drawings of this application are intended to distinguish between different objects, but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. A person skilled in the art explicitly and implicitly understands that embodiments described in this application may be combined with another embodiment.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a widget that is displayed on a display of the electronic device.

With the development of terminal technologies, currently, many electronic devices (such as mobile phones and tablets) have touchscreens. For example, a mobile phone is used as an example. Currently, almost all mobile phones have bezel-less screens, and support a touch-to-wake function and an always-on display (Always-On Display, AOD) function.

During actual use of these electronic devices with touchscreens, mistouch events often occur on the touchscreens. For example, when a mobile phone is placed in a pocket or under an energized conductor, there is a high probability that a mistouch event occurs on a touchscreen. Mistouch events on the touchscreen cause frequent screen turn-on of the electronic device, reducing a normal battery life of the electronic device. In addition, the mobile phone emits heat when placed in the pocket, degrading user experience.

In a current solution, a mistouch prevention function is implemented by determining a contact area of a touchscreen. In a call scenario of a mobile phone, an analog proximity sensor is turned on. When the contact area of the touchscreen changes from invalid (that is, an area of a capacitance change area is less than an area of a capacitance area touched by a single finger) to valid (that is, the area of the capacitance change area is greater than the area of the capacitance area touched by the single finger) or from valid to invalid, coordinates are read to determine whether an output value of the analog proximity sensor is valid (that is, the area of the capacitance change area is greater than the area of the capacitance area touched by the single finger). If the output value of the analog proximity sensor is valid, it is determined whether the contact area of the touchscreen changes from invalid to valid. If the contact area of the touchscreen changes from invalid to valid, a screen is turned off; or if the contact area of the touchscreen does not change from invalid to valid, a screen is turned on. If the output value of the analog proximity sensor is invalid, it is determined whether the mobile phone call ends, and if the mobile phone call ends, the analog proximity sensor is turned off.

It can be learned that, in the foregoing solution, whether a mistouch event occurs is determined by using a contact area of a touchscreen, which helps save power and avoids a misoperation to some extent. However, this cannot resolve a problem of a false report point (incorrectly reporting contact point information) generated when the mobile phone is mistouched in a pocket or is placed on an energized conductor. Due to the false report point, the mobile phone may frequently turn on or keep on the screen. As a result, a battery life of the mobile phone is reduced, and the mobile phone generates more heat, resulting in poor user experience.

To resolve the foregoing problems, this application provides a touch processing method. An electronic device 100 (for example, a mobile phone) may include a camera and a low-power processor (for example, a microprocessor). The camera may collect image data. The low-power processor may perform face detection based on the image data collected by the camera, to obtain a face detection result. After receiving a touch event, the low-power processor may determine, based on the face detection result, whether to respond to the touch event. If the low-power processor responds to the touch event, the electronic device 100 in a screen-off state may retain the screen-off state, or the electronic device 100 in a screen-on state may ignore the touch event, and execute a normal screen-off procedure based on a screen sleep setting policy. In this way, a problem of a mistouch on a screen can be resolved with extremely low power consumption, to prolong a battery life of the electronic device 100 and reduce power consumption, thereby improving user experience.

The screen-off state (which may also be referred to as a screen-off state) may be a state in which the electronic device 100 normally turns off a backlight and turns off the screen. When the screen is turned off, the electronic device 100 is in a "standby state". The electronic device 100 enters a normal working state provided that a user successfully unlocks the electronic device 100. It is easy to understand that an always-on display function is a display function provided by the electronic device 100 in the screen-off state.

The screen-on state may be a state in which the screen of the electronic device 100 is turned on, that is, a state in which the electronic device 100 works normally, and is also a most important state of the electronic device 100. Most user operations are performed in the screen-on state. For example, both a screen-locked state and a screen-unlocked state are screen-on states.

In embodiments of this application, the electronic device 100 may also be referred to as a terminal device, user equipment (user equipment, UE), an access terminal, a subscriber unit, a subscriber station, a mobile station, a mobile console, a remote terminal, a mobile device, a user terminal, a terminal, a wireless communication device, a user agent, or a user apparatus. The electronic device 100 in embodiments of this application may be a mobile phone (mobile phone) with a touchscreen, a tablet computer (Pad), a handheld device in a foldable screen form, a virtual reality (virtual reality, VR) terminal device, an augmented reality (augmented reality, AR) terminal device, or the like. This is not limited herein.

The touch processing method provided in embodiments of this application is mainly applied to two scenarios: a scenario of a screen-off state and a scenario of a screen-on state.

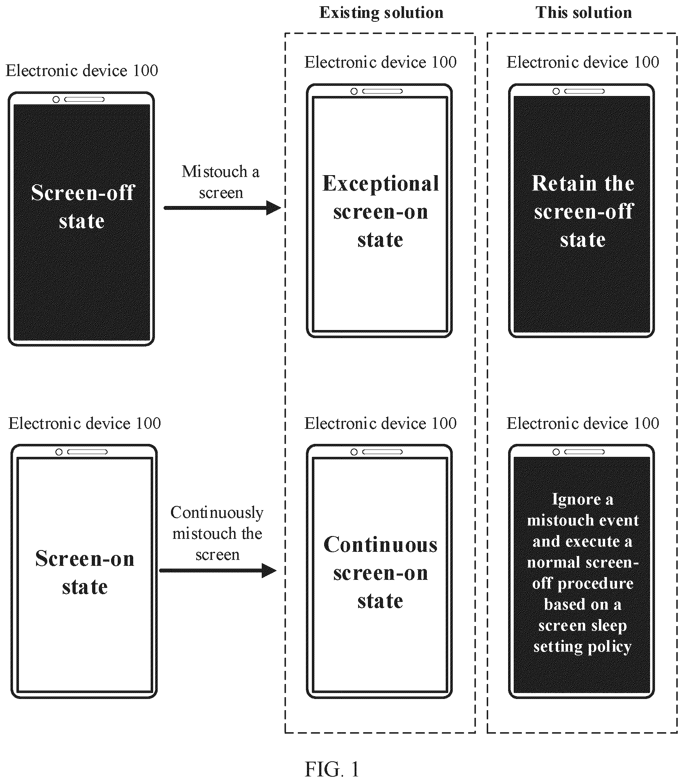

Refer to FIG. 1. For example, the electronic device 100 is a mobile phone with a touchscreen. FIG. 1 shows an example of processing policies for a screen mistouch event in a scenario in which the electronic device 100 is in a screen-off state and in a scenario in which the electronic device 100 is in a screen-on state.

In the scenario of the screen-off state, if a screen mistouch event occurs, when an existing solution is used, a screen of the electronic device 100 is exceptionally turned on; and when this solution is used, the electronic device 100 retains the screen-off state and the screen is not turned on.

In the scenario of the screen-on state, if a continuous screen mistouch event occurs, when an existing solution is used, the electronic device 100 keeps the screen on; and when this solution is used, the electronic device 100 ignores the mistouch event, and executes a normal screen-off procedure based on a screen sleep setting policy.

The following describes a diagram of a structure of an electronic device 100 according to an embodiment of this application.

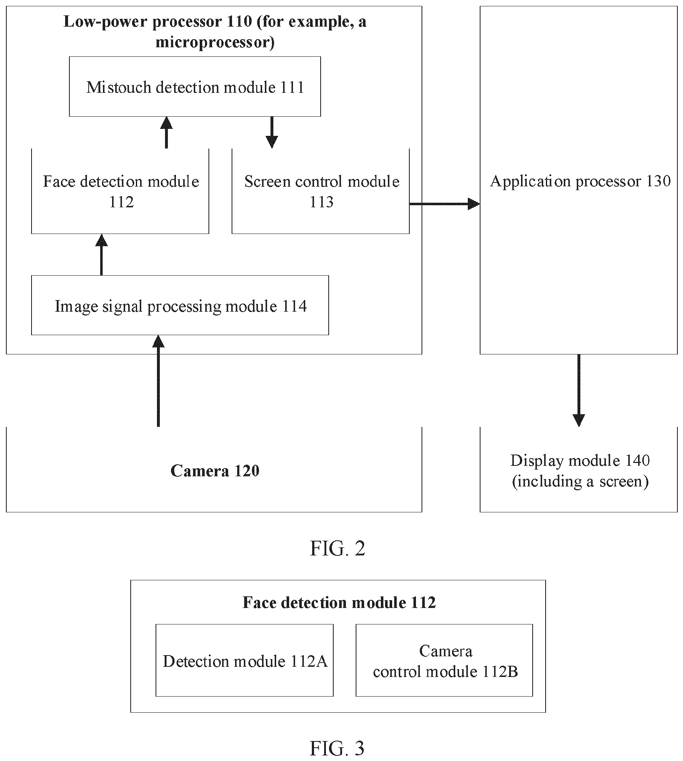

**FIG. 2** **shows an example of a structure of an electronic device 100 according to an embodiment of this application.**

As shown in FIG. 2, the electronic device 100 may include a low-power processor 110 (for example, a microprocessor), a camera 120, an application processor (Application Processor, AP) 130, and a display module 140 (including a screen). One or more functional modules may be deployed on the low-power processor 110, for example, a mistouch detection module 111, a face detection module 112, a screen control module 113, and an image signal processing module 114.

**The low-power processor 110** may be configured to implement a mistouch detection function.

The low-power processor 110 is a processor with low power consumption, and may assist a main processor (for example, the application processor 130) in performing some data processing work, for example, processing data of one or more sensors. In this way, load of the main processor can be reduced, and a battery life of the electronic device 100 can be prolonged.

It should be noted that a type of the low-power processor 110 is not limited in embodiments of this application. For example, the low-power processor 110 may be a microprocessor, a coprocessor, an auxiliary processor, a microcontroller unit (Microcontroller Unit, MCU).

In this embodiment of this application, for example, the low-power processor 110 is a microprocessor.

**The mistouch detection module 111** may be configured to determine, based on a screen touch event (namely, a touch report point) and a face detection result, whether a screen mistouch event occurs; may be further configured to receive the screen touch event; may be further configured to exchange data with the face detection module 112 (for example, obtain the face detection result); and may be further configured to exchange data with the screen control module 113 (for example, send a result of mistouch detection to the screen control module 113).

**The face detection module 112** may be configured to obtain, by using the image signal processing module 114, image data collected by the camera 120; may be further configured to perform face detection based on image data preprocessed by the image signal processing module 114, for example, detect whether there is a face in front of the screen of the electronic device 100; and may be further configured to set a working mode of the camera 120.

In some examples, the face detection module 112 and the image signal processing module 114 may be combined into one module.

**The screen control module 113** may be configured to control the screen based on the result of mistouch detection, for example, control an on/off state of the screen by using the application processor 130.

**The image signal processing module 114** may be configured to process image data fed back by the camera 120, and may be further configured to send processed image data to the face detection module 112.

It is easy to understand that image data collected by the camera 120 may not be directly used for face detection due to a natural condition factor. Therefore, before face detection is performed, the image signal processing module 114 may be used to perform preprocessing on the image data collected by the camera 120, for example, noise filtering, light compensation, grayscale transformation, histogram equalization, normalization, geometric correction, and sharpening.

**The camera 120** may be configured to collect image data in front of the screen of the electronic device 100.

In this embodiment of this application, the camera 120 may be a front-facing camera of the electronic device 100. The camera 120 may support an always-on (Always-on) mode, or may be set to an ultra-low power (Ultra-Low Power, ULP) mode. In the ULP mode, the camera 120 may output an image at a low resolution (for example, a resolution of 512*384) and a low frame rate (for example, a frame rate of 1 fps). In this way, power consumption of the electronic device 100 can be reduced, and a battery life can be prolonged.

In this embodiment of this application, the camera 120 may be connected to the low-power processor 110. For example, the camera 120 may be connected to the low-power processor 110 through a mobile industry processor interface (mobile industry processor interface, MIPI).

In some examples, the image signal processing module 114 may alternatively be disposed in the camera 120.

**The application processor 130** may be configured to exchange data with the screen control module 113 and the display module 140. For example, the application processor 130 may receive a message sent by the screen control module, and may determine, based on the message, whether to turn on or turn off the screen. For another example, the application processor 130 may send a message to the display module 140, to indicate the display module 140 to turn on or turn off the screen.

**The display module 140** may be configured to exchange data with the application processor 130. For example, the display module 140 may receive a message sent by the application processor 130, and may turn on or turn off the screen based on the message. In a screen-on state, the display module 140 may further display corresponding content on a user interface based on the message.

The electronic device 100 may further include a touch sensor (not shown in the figure). The touch sensor may be configured to detect a touch event. In this embodiment of this application, the low-power processor 110 may receive a touch event on the screen in the following two possible implementations.

Manner 1: After detecting the touch event, the touch sensor may send information about the touch event to the main processor (for example, the application processor 130), and after receiving the information about the touch event, the main processor may send the information about the touch event to the low-power processor 110.

Manner 2: After detecting the touch event, the touch sensor may directly send information about the touch event to the low-power processor 110.

Names of the foregoing modules are merely examples, and shall not constitute any limitation. For specific functions of the foregoing modules, refer to detailed descriptions in subsequent embodiments, and details are not described herein.

It may be understood that the structure of the electronic device 100 is merely an example. The electronic device 100 may alternatively have more or fewer modules than those shown in FIG. 2, may combine two or more modules, or may have different module configurations. This is not limited herein.

**FIG. 3** **shows an example of a structure of the face detection module 112 shown in** **FIG. 2****.**

As shown in FIG. 3, the face detection module 112 shown in FIG. 2 may include one or more submodules, for example, may include a detection module 112A and a camera control module 112B. The detection module 112A may be configured to perform face detection, and the camera control module 112B may be configured to set the working mode of the camera 120.

For example, in an initialization process, the camera control module 112B may set the working mode of the camera 120 shown in FIG. 2 to the ultra-low power mode. In this way, power consumption of the electronic device 100 can be reduced, and a battery life can be prolonged.

In some examples, an event that triggers the initialization process may be that when the electronic device 100 is restarted/powered on, a mistouch prevention mode is enabled by default, or a user actively chooses to enable the mistouch prevention mode.

After the camera 120 shown in FIG. 2 is set to the ultra-low power mode, the camera 120 may send collected image data to the image signal processing module 114 shown in FIG. 2 based on a preset frame rate in the ultra-low power mode. After preprocessing the image data, the image signal processing module 114 shown in FIG. 2 may send preprocessed image data to the detection module 112A for face detection, and store a face detection result. The face detection result may include a face status (for example, a face size, a face stay duration, and a face orientation), and the detection module 112A may store only a latest face detection result.

Optionally, the face detection module 112 may perform face detection imperceptibly (for example, perform face detection in a background). In this way, human engagement can be mitigated, a user operation can be simplified, and power consumption of the electronic device 100 is prevented from increasing due to occupying the screen while performing face detection in a visual form.

Optionally, the face detection module 112 may alternatively perform face detection in a visual form. In this way, accuracy of face detection may be improved.

Optionally, before performing face detection, the face detection module 112 may alternatively determine, based on a use habit of the user, whether to perform face detection in a visual form or in an imperceptible form, or the user may independently select a form for performing face detection. In this way, a requirement of the user may be met to the greatest extent.

In some examples, when detecting that the face status changes, the detection module 112A may actively notify the mistouch detection module 111 shown in FIG. 2, so that the mistouch detection module 111 may determine, based on a latest face detection result, whether a mistouch event occurs.

In some other examples, the mistouch detection module 111 shown in FIG. 2 may alternatively actively obtain a face detection result from the detection module 112A after receiving a touch event.

It may be understood that, when a mistouch detection function needs to be implemented, the electronic device 100 may directly obtain the face detection result stored by the detection module 112A, to determine whether a mistouch event occurs. If face detection is required to implement another function, the electronic device 100 may also directly obtain a face detection result from the detection module 112A.

The following describes a schematic flowchart of determining, by using a mistouch detection module, whether a touch event is a mistouch event according to an embodiment of this application.

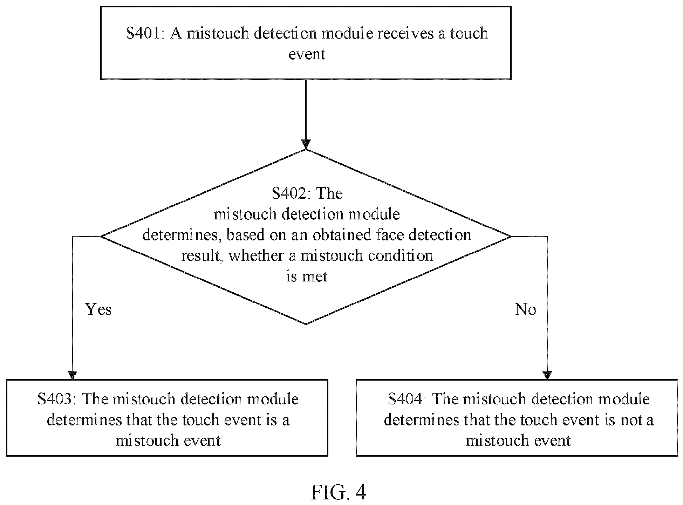

**FIG. 4** **shows an example of a specific procedure for determining, by a mistouch detection module of an electronic device 100, whether a touch event is a mistouch event according to an embodiment of this application.** The procedure specifically includes the following steps.

**S401:** The mistouch detection module receives a touch event.

Specifically, the mistouch detection module may monitor a touch event on a screen in real time, and may perform the following step S402 after receiving the touch event.

It is easy to understand that the touch event may be artificially generated (for example, generated due to a finger touch of a user, or generated due to relative motion when the electronic device 100 is placed in a pocket or a bag), or may be non-artificially generated (for example, generated due to an energized conductor).

**S402:** The mistouch detection module determines, based on an obtained face detection result, whether a mistouch condition is met, and if the mistouch condition is met, performs the following step S403, or if the mistouch condition is not met, performs the following step S404.

Specifically, after receiving the touch event, the mistouch detection module may determine, based on the obtained face detection result, whether the mistouch condition is met. Meeting the mistouch condition may mean that the user is not using the electronic device 100, and not meeting the mistouch condition may mean that the user is using the electronic device 100.

It is easy to understand that the face detection result is obtained by the mistouch detection module from a face detection module. In a use scenario (that is, a scenario in which a user is using the electronic device 100) and a non-use scenario (that is, a scenario in which the user does not use the electronic device 100) of the electronic device 100, face image data of images collected by a front-facing camera is different. For example, in the use scenario, the front-facing camera may collect face image data, but in the non-use scenario (for example, in a scenario in which the user places the electronic device 100 in a pocket or a bag and has no intention of using the electronic device 100), the front-facing camera cannot collect face image data. Therefore, the face detection module may determine, based on the face image data, whether the mistouch condition is met (that is, whether the user is using the electronic device 100).

In this embodiment of this application, the face detection module may perform face detection based on the face image data. When the face image data meets a preset condition, it indicates that face detection succeeds, and the mistouch detection module may determine that the mistouch condition is not met. When the face image data does not meet the preset condition, it indicates that face detection fails, and the mistouch detection module may determine that the mistouch condition is met.

For example, the face detection module may detect, based on image data collected by the front-facing camera of the electronic device 100, whether the image data includes a face image. If the image data includes the face image, the mistouch detection module may determine that the mistouch condition is not met. If the image data does not include the face image, the mistouch detection module may determine that the mistouch condition is met.

In some examples, to improve accuracy of face detection, when determining that the image data collected by the front-facing camera of the electronic device 100 includes the face image, the face detection module may perform further face detection based on a face size, face stay duration, a face orientation, a distance between a face and a screen, or the like, to determine whether the mistouch condition is met.

For example, when the user uses the electronic device 100, a face usually faces the screen of the electronic device 100 as much as possible, so that the front-facing camera of the electronic device 100 can collect most face image data. Therefore, when face detection is performed based on a face size, if the face size is greater than or equal to a preset size, it may be determined that the mistouch condition is not met (that is, the user is using the electronic device 100); or if the face size is less than a preset size, it may be determined that the mistouch condition is met (that is, the user is not using the electronic device 100). The preset size may be a portion of a face area (for example, 1/8) or 0 (that is, no face is present), which may be specifically set according to an actual requirement, and is not limited herein.

For another example, when the user uses the electronic device 100, stay duration of a face in a shooting range of the front-facing camera of the electronic device 100 is longer than stay duration in a scenario in which the electronic device 100 is not used. Therefore, when face detection is performed based on face stay duration, if the face stay duration is greater than or equal to preset stay duration, it may be determined that the mistouch condition is not met (that is, the user is using the electronic device 100); or if the face stay duration is less than preset stay duration, it may be determined that the mistouch condition is met (that is, the user is not using the electronic device 100). The preset stay duration may be 200 ms, 300 ms, or the like, which may be specifically set according to an actual requirement, and is not limited herein.

For another example, when the user uses the electronic device 100, the user usually keeps a face orientation within a line-of-sight range that allows the screen of the electronic device 100 to be seen, so that the user can trigger a touch event on the screen of the electronic device 100. Therefore, when face detection is performed based on the face orientation, if the face orientation is within a preset angle range, it may be determined that the mistouch condition is not met (that is, the user is using the electronic device 100); or if the face orientation deviates from a preset angle range, it may be determined that the mistouch condition is met (that is, the user is not using the electronic device 100). The preset angle range may be a range of 180° above a plane on which the screen of the electronic device 100 is located, which may be specifically set according to an actual requirement, and is not limited herein.

For another example, when the user uses the electronic device 100, a distance between a face and the screen is usually short. When the image data collected by the front-facing camera includes the face image data, a ratio of an area of a face image to an area of a captured image may reflect the distance between the face and the screen. A larger ratio indicates a shorter distance between the face and the screen. Therefore, when face detection is performed based on the distance between the face and the screen, if the distance between the face and the screen is less than a preset distance threshold, it may be determined that the mistouch condition is not met (that is, the user is using the electronic device 100); or if the distance between the face and the screen is greater than or equal to a preset distance threshold, it may be determined that the mistouch condition is met (that is, the user is not using the electronic device 100). The preset distance threshold may be 20 cm, or the like, which may be specifically set according to an actual requirement, and is not limited herein.

In some examples, to improve accuracy of face detection, at least two of the face size, the face stay duration, the face orientation, and the distance between the face and the screen may be combined based on an actual situation to perform face detection.

**S403:** The mistouch detection module determines that the touch event is a mistouch event.

Specifically, based on the obtained face detection result, when determining that the mistouch condition is met (that is, the user is not using the electronic device 100), the mistouch detection module may further determine that the touch event is the mistouch event.

**S404:** The mistouch detection module determines that the touch event is not a mistouch event.

Specifically, based on the obtained face detection result, when determining that the mistouch condition is not met (that is, the user is using the electronic device 100), the mistouch detection module may further determine that the touch event is not the mistouch event.

### Application scenario 1: Scenario of a screen-off state

The following describes a schematic flowchart of implementing a touch processing method in a scenario in which an electronic device 100 is in a screen-off state according to an embodiment of this application.

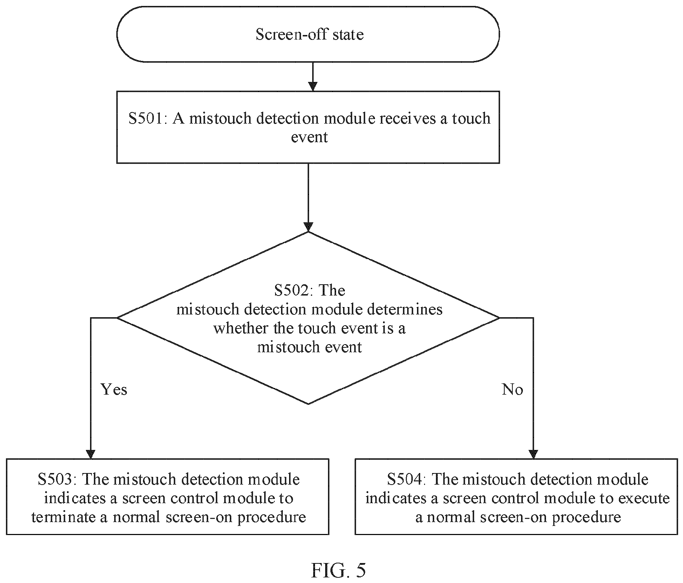

**FIG. 5** **shows an example of a specific procedure for implementing a touch processing method in a scenario in which an electronic device 100 is in a screen-off state according to an embodiment of this application.** The procedure specifically includes the following steps.

**S501:** A mistouch detection module receives a touch event.

Specifically, when the electronic device 100 is in the screen-off state, the mistouch detection module may monitor a touch event on a screen in real time, and may perform the following step S502 after receiving the touch event.

It is easy to understand that the touch event may be artificially generated (for example, generated due to a finger touch of a user, or generated due to relative motion when the electronic device 100 is placed in a pocket or a bag), or may be non-artificially generated (for example, generated due to an energized conductor).

**S502:** The mistouch detection module determines whether the touch event is a mistouch event, and if the touch event is a mistouch event, performs the following step S503, or if the touch event is not a mistouch event, performs the following step S504.

For a specific execution process of that "the mistouch detection module determines whether the touch event is a mistouch event", refer to the foregoing text descriptions in FIG. 4. Details are not described herein again.

**S503:** The mistouch detection module indicates a screen control module to terminate a normal screen-on procedure.

Specifically, if screen-on of the electronic device 100 needs to be triggered due to the touch event, the mistouch detection module of the electronic device 100 may first determine whether the touch event is a mistouch event. If the touch event is a mistouch event, the mistouch detection module may indicate the screen control module to terminate the normal screen-on procedure. In this case, the screen control module may ignore the touch event, not respond to the mistouch event, and not process the touch event. In this way, when the touch event is a mistouch event, even if the touch event is detected, the electronic device 100 may retain the screen-off state, to reduce power consumption of the electronic device 100 and prolong a battery life.

In some examples, after determining that the touch event is a mistouch event, the mistouch detection module may directly intercept the touch event without notifying the screen control module. In this way, when the touch event is a mistouch event, even if the touch event is detected, the electronic device 100 may retain the screen-off state, to reduce power consumption of the electronic device 100 and prolong a battery life.

**S504:** The mistouch detection module indicates a screen control module to execute a normal screen-on procedure.

Specifically, if screen-on of the electronic device 100 needs to be triggered due to the touch event, the mistouch detection module of the electronic device 100 may first determine whether the touch event is a mistouch event. If the touch event is not a mistouch event, the mistouch detection module may indicate the screen control module to execute the normal screen-on procedure. In this case, the screen control module needs to normally respond to the touch event to trigger screen-on of the electronic device 100.

### Application scenario 2: Scenario of a screen-on state

The following describes a schematic flowchart of implementing a touch processing method in a scenario in which an electronic device 100 is in a screen-on state according to an embodiment of this application.

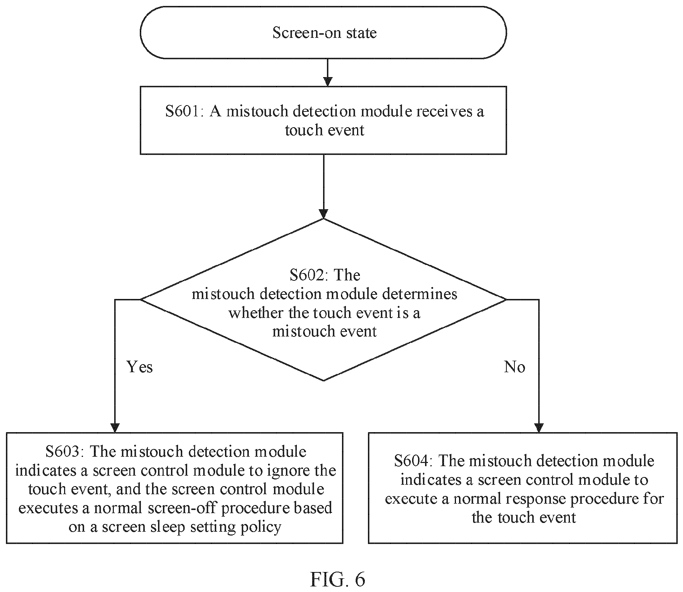

**FIG. 6** **shows an example of a specific procedure for implementing a touch processing method in a scenario in which an electronic device 100 is in a screen-on state according to an embodiment of this application.** The procedure specifically includes the following steps.

**S601:** A mistouch detection module receives a touch event.

Specifically, when the electronic device 100 is in the screen-on state, the mistouch detection module may monitor a touch event on a screen in real time, and may perform the following step S602 after receiving the touch event.

It is easy to understand that the touch event may be artificially generated (for example, generated due to a finger touch of a user, or generated due to relative motion when the electronic device 100 is placed in a pocket or a bag), or may be non-artificially generated (for example, generated due to an energized conductor).

**S602:** The mistouch detection module determines whether the touch event is a mistouch event, and if the touch event is a mistouch event, performs the following step S603, or if the touch event is not a mistouch event, performs the following step S604.

For a specific execution process of that "the mistouch detection module determines whether the touch event is a mistouch event", refer to the foregoing text descriptions in FIG. 4. Details are not described herein again.

**S603:** The mistouch detection module indicates a screen control module to ignore the touch event, and the screen control module executes a normal screen-off procedure based on a screen sleep setting policy.

Specifically, after receiving the touch event, the mistouch detection module of the electronic device 100 may first determine whether the touch event is a mistouch event. If the touch event is a mistouch event, the mistouch detection module may indicate the screen control module to ignore the touch event. Further, the screen control module may execute the normal screen-off procedure based on the screen sleep setting policy. In other words, the electronic device 100 may start the normal screen-off procedure when specified screen sleep duration expires, to switch from the screen-on state to a screen-off state. In this way, when the touch event is a mistouch event, even if the touch event is detected, the electronic device 100 may not respond to the touch event, to avoid a false response to the touch event, thereby resolving a problem that the electronic device 100 in the screen-on state does not turn off the screen due to the mistouch event. This reduces power consumption of the electronic device 100, and prolongs a battery life.

In some examples, after determining that the touch event is the mistouch event, the mistouch detection module may directly intercept the touch event without notifying the screen control module. In this way, when the touch event is a mistouch event, even if the touch event is detected, the electronic device 100 does not respond to the touch event, to avoid a false response to the touch event, thereby resolving a problem that the electronic device 100 in the screen-on state does not turn off the screen due to the mistouch event. This reduces power consumption of the electronic device 100, and prolongs a battery life.

During actual application, when the touch event is the mistouch event, if only the touch event is ignored, only a false response to the touch event can be avoided, but false responses to subsequent touch events cannot be reduced. Therefore, in some examples, when the touch event is the mistouch event, a touch function of the electronic device 100 may be temporarily disabled, and/or touch sensitivity of the electronic device 100 may be reduced. In this way, power consumption of the electronic device 100 can be prevented from increasing due to repeatedly triggered mistouch events. For example, a touch function of an edge area on the screen of the electronic device 100 may be temporarily disabled, and/or sensitivity of an area other than an edge area on the screen of the electronic device 100 may be reduced. In this way, a requirement of the user can be met to a greater extent.

During actual application, the electronic device 100 may alternatively detect a plurality of touch events consecutively. When the plurality of consecutively detected touch events are mistouch events, the electronic device 100 may consider that the touch events are generated by repeated touches of a pocket or a bag on the screen of the electronic device 100 that is placed in the pocket or the bag. In this case, the electronic device 100 may directly lock the screen. This can avoid an increase in power consumption of the electronic device 100 caused by repeatedly detecting touch events and repeatedly determining whether the touch events are mistouch events. In addition, triggering of the touch events can be reduced, thereby further reducing false responses of the electronic device 100 to the touch events.

During actual application, in some special scenarios, for example, a scenario in which the user watches a video, even if the mistouch detection module does not receive a touch event, whether the electronic device 100 needs to turn off the screen may be determined based on an obtained face detection result. For example, when there is no face in front of the screen of the electronic device 100, the normal screen-off procedure may be started when the specified screen sleep duration expires, and the screen-on state is switched to the screen-off state. In this way, screen-off processing is performed when it is determined that no one watches the video, so that unnecessary power consumption of the electronic device 100 can be reduced.

**S604:** The mistouch detection module indicates a screen control module to execute a normal response procedure for the touch event.

Specifically, after receiving the touch event, the mistouch detection module of the electronic device 100 may first determine whether the touch event is a mistouch event. If the touch event is not the mistouch event, the mistouch detection module may indicate the screen control module to execute the normal response procedure for the touch event. In this case, the screen control module needs to normally respond to the touch event.

### Application scenario 1: Scenario of a screen-off state

The following describes another schematic flowchart of implementing a touch processing method in a scenario in which an electronic device 100 is in a screen-off state according to an embodiment of this application.

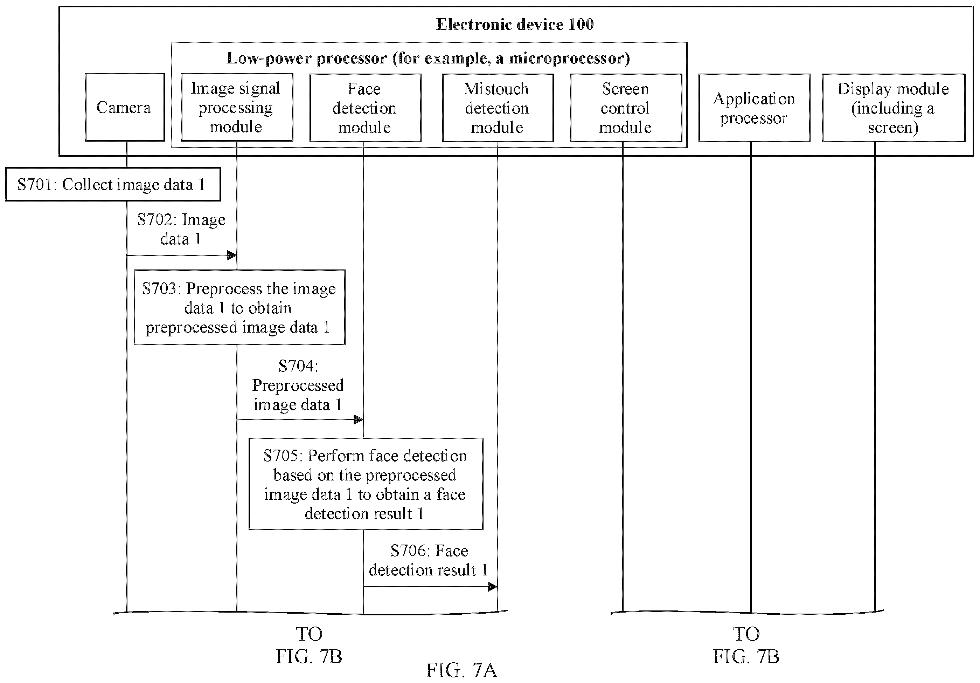

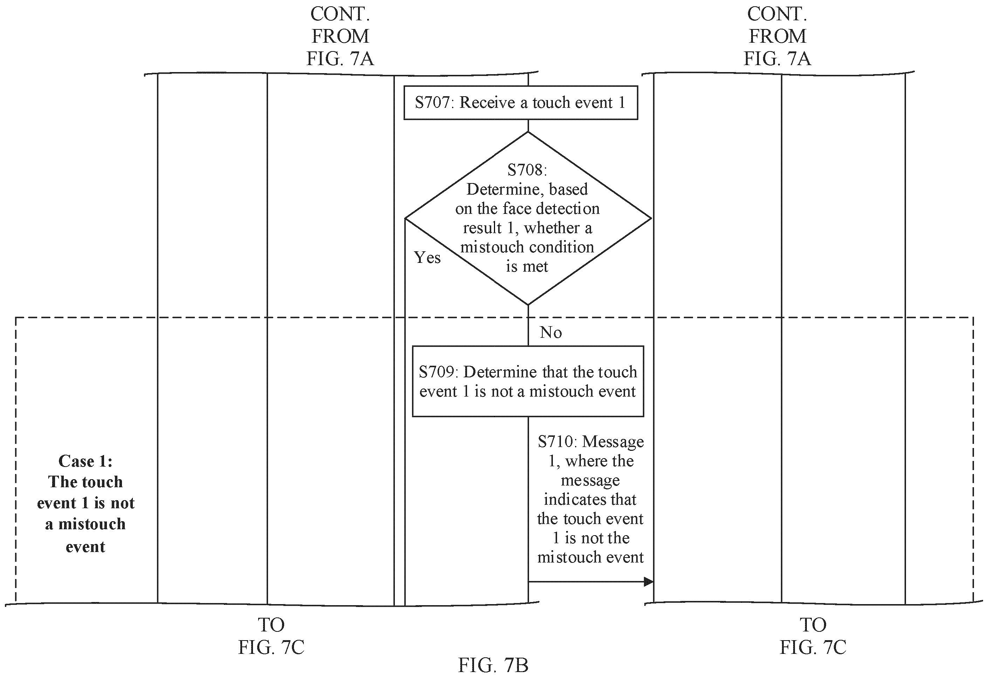

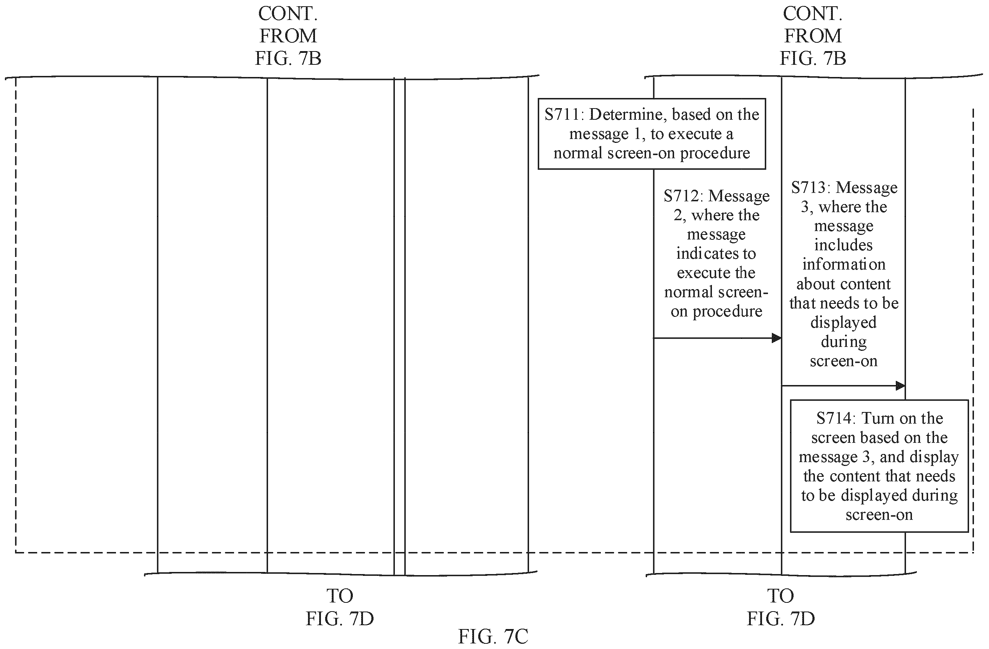

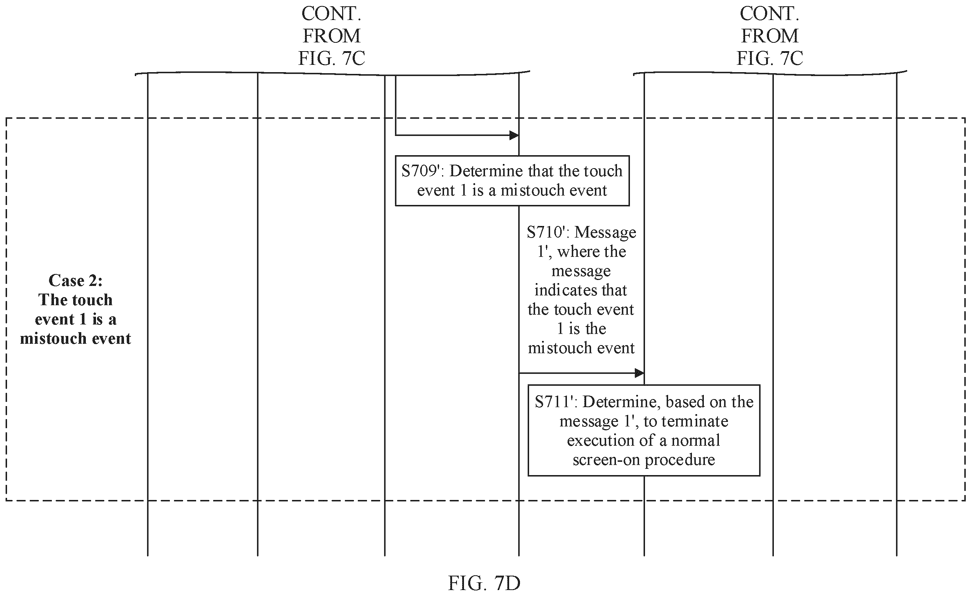

**FIG. 7A to FIG. 7D** **show an example of a specific procedure for implementing a touch processing method in a scenario in which an electronic device 100 is in a screen-off state according to an embodiment of this application.**

As shown in FIG. 7A to FIG. 7D, the method may be applied to the electronic device 100. The electronic device 100 may include a camera, a low-power processor (for example, a microprocessor), an application processor, and a display module (including a screen). An image signal processing module, a face detection module, a mistouch detection module, and a screen control module may be deployed on the low-power processor. The following describes in detail specific steps of the method.

**S701 and S702:** The camera collects image data 1, and then the camera may send the image data 1 to the image signal processing module.

The camera may be a front-facing camera of the electronic device 100. To reduce power consumption of the electronic device 100, a working mode of the camera may be an ultra-low power mode, and the camera may further support an always-on (Always-on) mode, so that data of an image in front of the screen of the electronic device 100 can be collected in real time.

Specifically, the camera may collect image data in real time, for example, collect the image data 1. After collecting the image data 1, the camera may send the image data 1 to the image signal processing module, so that the image signal processing module may preprocess the image data 1.

**S703 and S704:** The image signal processing module preprocesses the image data 1 to obtain preprocessed image data 1, and then the image signal processing module may send the preprocessed image data 1 to the face detection module.

The preprocessing performed by the image signal processing module on the image data 1 may include but is not limited to: noise filtering, light compensation, grayscale transformation, histogram equalization, normalization, geometric correction, and sharpening.

Specifically, the image signal processing module obtains the preprocessed image data 1 by preprocessing the image data 1 collected by the camera, and may send the data to the face detection module, so that the face detection module may perform face detection based on the data.

**S705:** The face detection module performs face detection based on the preprocessed image data 1 to obtain a face detection result 1.

A characteristic parameter used by the face detection module to perform face detection may include but is not limited to: a face size, face stay duration, a face orientation, or a distance between a face and a screen. For a specific execution process of performing face detection by the face detection module, refer to the text description of the face detection process in step S402 shown in FIG. 4. Details are not described herein again.

**S706:** The face detection module sends the face detection result 1 to the mistouch detection module.

The face detection module may actively send the face detection result 1 to the mistouch detection module.

In some examples, alternatively, the mistouch detection module may actively obtain the face detection result 1 from the face detection module. For example, the mistouch detection module may actively obtain the face detection result 1 from the face detection module after receiving a touch event.

**S707 and S708:** The mistouch detection module receives a touch event 1, and then the mistouch detection module may determine, based on the face detection result 1, whether a mistouch condition is met, and if the mistouch condition is not met, performs the following step S709; or if the mistouch condition is met, performs the following step S709'.

Specifically, the mistouch detection module may monitor a touch event on the screen in real time, and may perform step S708 after receiving the touch event.

It is easy to understand that the touch event may be artificially generated (for example, generated due to a finger touch of a user, or generated due to relative motion when the electronic device 100 is placed in a pocket or a bag), or may be non-artificially generated (for example, generated due to an energized conductor).

For a specific execution process of that "the mistouch detection module may determine, based on the face detection result 1, whether a mistouch condition is met", refer to the related text description in step S402 shown in FIG. 4. Details are not described herein again.

In some examples, the camera may collect the image data after the mistouch detection module receives the touch event 1. In other words, step S701 to step S706 may be performed after step S707.

### Case 1 (S709 to S714): The touch event 1 is not a mistouch event

**S709 and S710:** The mistouch detection module determines that the touch event 1 is not the mistouch event, and then the mistouch detection module may send a message 1 to the screen control module, where the message indicates that the touch event 1 is not the mistouch event.

Specifically, if the mistouch detection module determines, based on the face detection result 1, that the mistouch condition is not met, the mistouch detection module may determine that the touch event 1 is not the mistouch event. Then, the mistouch detection module may send the message 1 to the screen control module, where the message indicates that the touch event 1 is not the mistouch event, so that the screen control module may subsequently execute a normal screen-on procedure in response to the touch event 1.

**S711 and S712:** The screen control module determines, based on the message 1, to execute the normal screen-on procedure, and then the screen control module may send a message 2 to the application processor, where the message indicates to execute the normal screen-on procedure.

Specifically, after receiving the message 1 sent by the mistouch detection module, the screen control module may determine, based on the message 1, that the touch event 1 needs to be responded to, and determine to execute the normal screen-on procedure. Then, the screen control module may send the message 2 to the application processor, where the message indicates the execution of the normal screen-on procedure.

**S713:** The application processor sends a message 3 to the display module, where the message includes information about content that needs to be displayed during screen-on.

Specifically, after receiving the message 2 sent by the screen control module, the application processor may determine that the normal screen-on procedure needs to be executed. Further, the application processor may send the message 3 to the display module, where the message may include the information about the content that needs to be displayed during screen-on, so that the display module may subsequently display the corresponding content based on the information during screen-on.

**S714:** The display module turns on the screen based on the message 3, and displays the content that needs to be displayed during screen-on.

Specifically, after receiving the message 3 sent by the application processor, the display module may turn on the screen based on the message 3, and may display the content that needs to be displayed during screen-on. In this case, the electronic device 100 is switched from the screen-off state to a screen-on state.

### Case 2 (S709' to S711'): The touch event 1 is a mistouch event

**S709' and S710':** The mistouch detection module determines that the touch event 1 is the mistouch event, and then the mistouch detection module may send a message 1' to the screen control module, where the message indicates that the touch event 1 is the mistouch event.

Specifically, if the mistouch detection module determines, based on the face detection result 1, that the mistouch condition is met, the mistouch detection module may determine that the touch event 1 is the mistouch event. Then, the mistouch detection module may send the message 1' to the screen control module, where the message indicates that the touch event 1 is the mistouch event, so that the screen control module may subsequently not respond to the touch event 1.

In some examples, after determining that the touch event 1 is the mistouch event, the mistouch detection module may directly intercept the touch event 1 without notifying the screen control module.

**S711':** The screen control module determines, based on the message 1', to terminate execution of a normal screen-on procedure.

Specifically, after receiving the message 1' sent by the mistouch detection module, the screen control module may determine, based on the message 1', not to respond to the touch event 1 (that is, ignore the touch event 1), and determine to terminate the execution of the normal screen-on procedure.

In this way, when the touch event 1 is a mistouch event, even if the touch event 1 is detected, the electronic device 100 can retain the screen-off state, thereby achieving mistouch prevention effect and improving user experience. In addition, the camera and the low-power processor that are used in the entire process of implementing the mistouch prevention function are low-power components, greatly reducing power consumption of the electronic device 100 and prolonging a battery life.

### Application scenario 2: Scenario of a screen-on state

The following describes another schematic flowchart of implementing a touch processing method in a scenario in which an electronic device 100 is in a screen-on state according to an embodiment of this application.

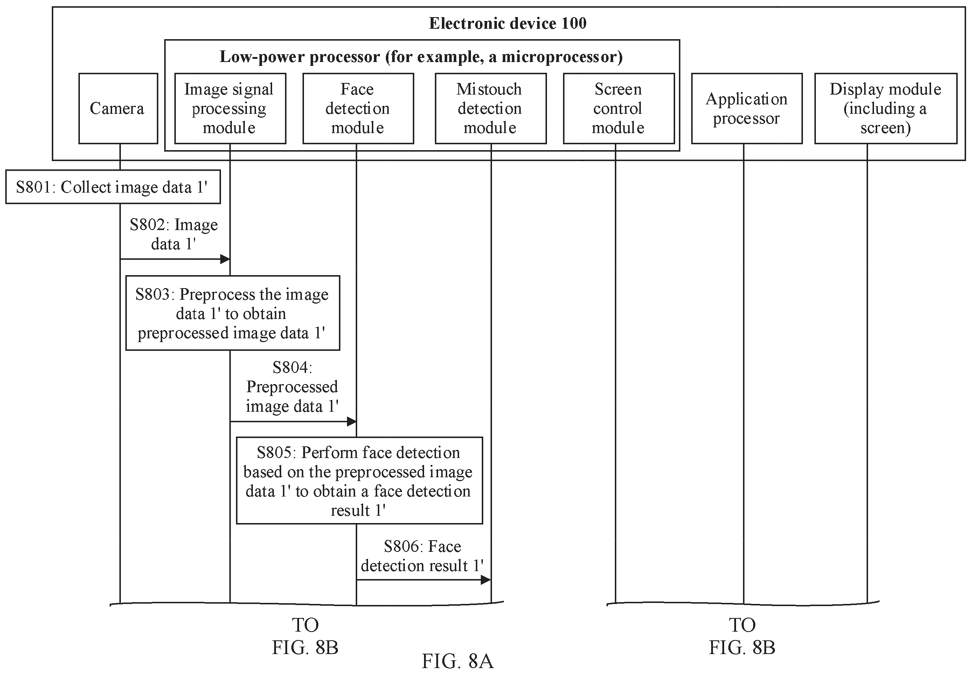

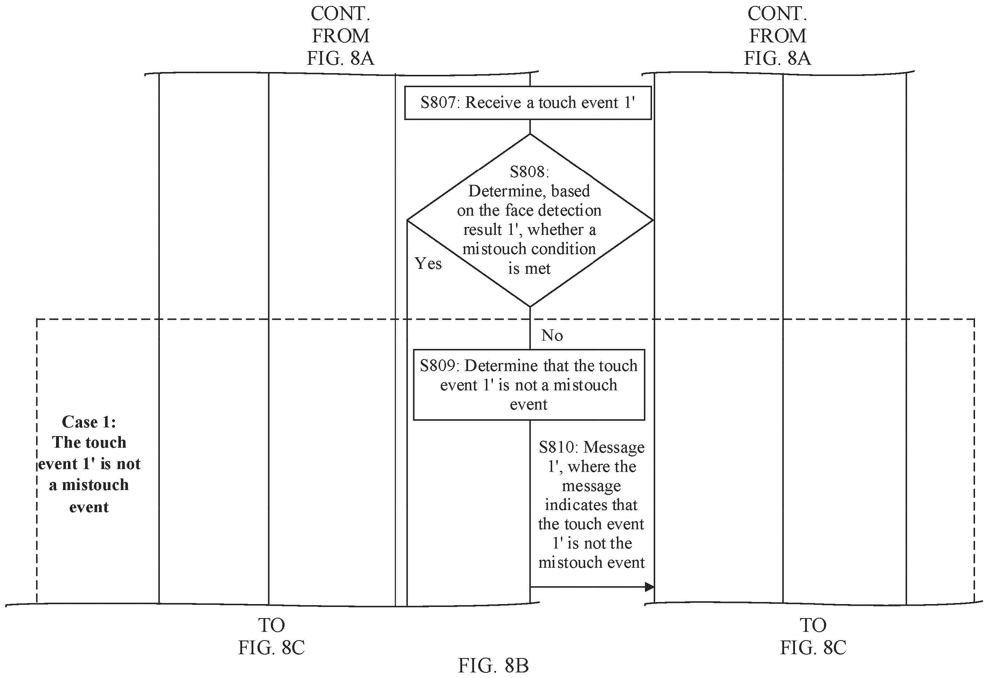

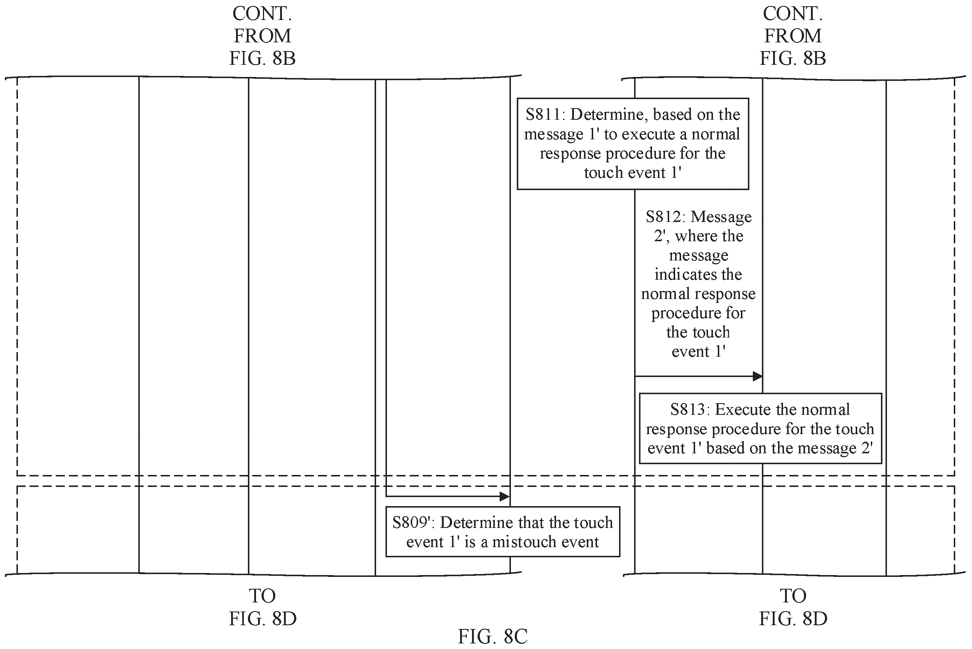

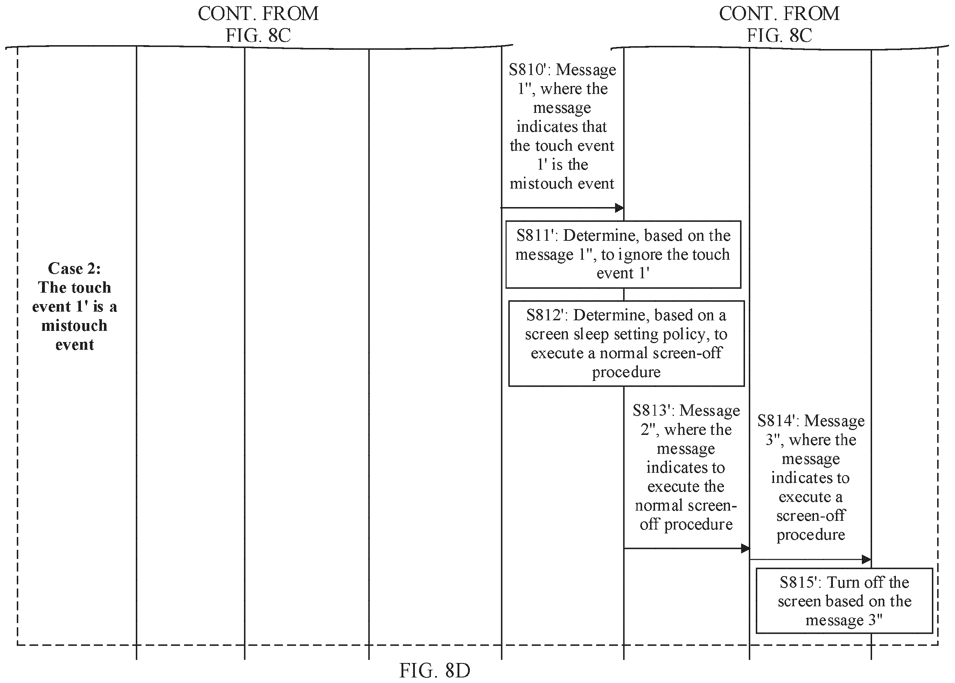

**FIG. 8A to FIG. 8D** **show an example of a specific procedure for implementing a touch processing method in a scenario in which an electronic device 100 is in a screen-on state according to an embodiment of this application.**

As shown in FIG. 8A to FIG. 8D, the method may be applied to the electronic device 100. The electronic device 100 may include a camera, a low-power processor (for example, a microprocessor), an application processor, and a display module (including a screen). An image signal processing module, a face detection module, a mistouch detection module, and a screen control module may be deployed on the low-power processor. The following describes in detail specific steps of the method.

**S801 and S802:** The camera collects image data 1', and then the camera may send the image data 1' to the image signal processing module.

**S803 and S804:** The image signal processing module preprocesses the image data 1' to obtain preprocessed image data 1', and then the image signal processing module may send the preprocessed image data 1' to the face detection module.

**S805:** The face detection module performs face detection based on the preprocessed image data 1' to obtain a face detection result 1'.

**S806:** The face detection module sends the face detection result 1' to the mistouch detection module.

**S807 and S808:** The mistouch detection module receives a touch event 1', and then the mistouch detection module may determine, based on the face detection result 1', whether a mistouch condition is met, and if the mistouch condition is not met, performs the following step S809; or if the mistouch condition is met, performs the following step S809'.

Step S801 to step S808 are similar to step S701 to step S708 shown in FIG. 7A to FIG. 7D. For a specific execution process, refer to the related text descriptions of step S701 to step S708 shown in FIG. 7A to FIG. 7D. Details are not described herein again.

### Case 1 (S809 to S814): The touch event 1' is not a mistouch event

**S809 and S810:** The mistouch detection module determines that the touch event 1' is not the mistouch event, and then the mistouch detection module may send a message 1' to the screen control module, where the message indicates that the touch event 1' is not the mistouch event.

Specifically, if the mistouch detection module determines, based on the face detection result 1', that the mistouch condition is not met, the mistouch detection module may determine that the touch event 1' is not the mistouch event. Then, the mistouch detection module may send the message 1' to the screen control module, where the message indicates that the touch event 1' is not the mistouch event, so that the screen control module may subsequently execute a normal response procedure for the touch event 1' as a normal response to the touch event 1'.

**S811 and S812:** The screen control module determines, based on the message 1', to execute the normal response procedure for the touch event 1', and then the screen control module may send a message 2' to the application processor, where the message indicates to execute the normal response procedure for the touch event 1'.

Specifically, after receiving the message 1' sent by the mistouch detection module, the screen control module may determine, based on the message 1', that the touch event 1' needs to be normally responded to, and determine to execute the normal response procedure for the touch event 1'. Then, the screen control module may send the message 2' to the application processor, where the message indicates the execution of the normal response procedure for the touch event 1'.

**S813:** The application processor executes the normal response procedure for the touch event 1' based on the message 2'.

Specifically, after receiving the message 2' sent by the screen control module, the application processor may execute the normal response procedure for the touch event 1' based on the message 2'. For example, if the touch event 1' is a tap event of a user on the screen of the electronic device 100, the application processor may execute a response procedure corresponding to the tap event on the screen. For another example, if the touch event 1' is a slide event of a user on the screen of the electronic device 100, the application processor may execute a response procedure corresponding to the slide event, or the like.

### Case 2 (S809' to S815'): The touch event 1' is a mistouch event

**S809' and S810':** The mistouch detection module determines that the touch event 1' is the mistouch event, and then the mistouch detection module may send a message 1" to the screen control module, where the message indicates that the touch event 1' is the mistouch event.

Specifically, if the mistouch detection module determines, based on the face detection result 1', that the mistouch condition is met, the mistouch detection module may determine that the touch event 1' is the mistouch event. Then, the mistouch detection module may send the message 1" to the screen control module, where the message indicates that the touch event 1' is the mistouch event, so that the screen control module may subsequently not respond to the touch event 1'.

In some examples, after determining that the touch event 1' is the mistouch event, the mistouch detection module may directly intercept the touch event 1' without notifying the screen control module.

**S811' to S813':** The screen control module determines, based on the message 1", to ignore the touch event 1', and then the screen control module may determine, based on a screen sleep setting policy, to execute a normal screen-off procedure. Next, the screen control module may send a message 2" to the application processor, where the message indicates to execute the normal screen-off procedure.

Specifically, after receiving the message 1" sent by the mistouch detection module, the screen control module may determine, based on the message 1", not to respond to the touch event 1' (that is, ignore the touch event 1'). Then, the screen control module may determine, based on the screen sleep setting policy, that the normal screen-off procedure needs to be executed. Next, the screen control module may send the message 2" to the application processor, where the message indicates the execution of the normal screen-off procedure.

**S814':** The application processor sends a message 3" to the display module, where the message indicates to execute a screen-off procedure.

Specifically, after receiving the message 2" sent by the screen control module, the application processor may determine that the normal screen-off procedure needs to be started when specified screen sleep duration expires. When the specified screen sleep duration expires, the application processor may send the message 3" to the display module, where the message indicates the execution of the screen-off procedure.

In some examples, step S813' may be performed when the specified screen sleep duration expires.

In some other examples, step S814' may be performed when the specified screen sleep duration expires.

**S815':** The display module turns off the screen based on the message 3".

Specifically, after receiving the message 3" sent by the application processor, the display module may determine that the screen-off procedure needs to be executed. Further, the display module may turn off the screen.

In this way, when the touch event 1' is a mistouch event, even if the touch event 1' is detected, the electronic device 100 may not respond to the touch event, to avoid a false response to the touch event, thereby achieving mistouch prevention effect. This resolves a problem that the electronic device 100 in the screen-on state does not turn off the screen due to the mistouch event, and problems of increased power consumption and a reduced battery life of the electronic device 100 due to continuous screen-on caused by continuous mistouches. In addition, the camera and the low-power processor that are used in the entire process of implementing the mistouch prevention function are low-power components, greatly reducing power consumption of the electronic device 100

In embodiments of this application, a first image may be the image data 1 in FIG. 7A to FIG. 7D (or the image data 1' in FIG. 8A to FIG. 8D), a first touch event may be the touch event 1 in FIG. 7A to FIG. 7D (or the touch event 1' in FIG. 8A to FIG. 8D), a first face detection result may be the face detection result 1 in FIG. 7A to FIG. 7D (or the face detection result 1' in FIG. 8A to FIG. 8D), a first message may be the message 1 or the message 1' in FIG. 7A to FIG. 7D (or the message 1' or the message 1" in FIG. 8A to FIG. 8D), and a first condition may be the mistouch condition.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Persons of ordinary skill in the art may understand that all or some of the procedures of the methods in embodiments may be implemented by a computer program instructing relevant hardware. The program may be stored in the computer-readable storage medium. When the program runs, the procedures of the method embodiments may be included. The foregoing storage medium includes any medium that can store program code, such as a ROM, a random access memory RAM, a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An electronic device, wherein the electronic device comprises a camera and a microprocessor, and the camera is connected to the microprocessor, wherein
the camera is configured to capture a first image;
the microprocessor is configured to receive a first touch event; and
the microprocessor is further configured to: generate a first face detection result based on the first image, and determine, based on the first face detection result, whether the microprocessor responds to the first touch event.

2. The electronic device according to claim 1, wherein the microprocessor is specifically configured to receive the first touch event when the electronic device is in a screen-off state, and when it is determined, based on the first face detection result, that the microprocessor does not respond to the first touch event, the electronic device retains the screen-off state.

3. The electronic device according to claim 1 or 2, wherein the electronic device further comprises a main processor and a touch sensor, wherein
the touch sensor is configured to send information about the first touch event to the main processor; the main processor is configured to: receive the information that is about the first touch event and that is sent by the touch sensor, and send the information about the first touch event to the microprocessor; and the microprocessor is specifically configured to receive the information that is about the first touch event and that is sent by the main processor;
or
the touch sensor is configured to send information about the first touch event to the microprocessor, and the microprocessor is specifically configured to receive the information that is about the first touch event and that is sent by the touch sensor.

4. The electronic device according to any one of claims 1 to 3, wherein one or more modules are deployed on the microprocessor, and the one or more modules comprise a face detection module, a mistouch detection module, and a screen control module, wherein
the face detection module is configured to generate the first face detection result based on the first image;
the mistouch detection module is configured to: obtain the first face detection result from the face detection module, and determine, based on the first face detection result, whether the screen control module responds to the first touch event;
the mistouch detection module is further configured to send a first message to the screen control module, wherein the first message indicates the screen control module to respond to or not to respond to the first touch event; and
the screen control module is configured to: receive the first message, and respond to or skip responding to the first touch event based on the first message.

5. The electronic device according to claim 4, wherein the face detection module comprises a detection module and a camera control module, wherein
the detection module is configured to generate and store the first face detection result based on the first image; and
the camera control module is configured to set a working mode of the camera, wherein the working mode of the camera comprises an ultra-low power ULP mode.

6. The electronic device according to claim 4 or 5, wherein that the mistouch detection module is configured to determine, based on the first face detection result, whether the screen control module responds to the first touch event specifically comprises:
determining, by the mistouch detection module, whether the first face detection result meets one or more of the following first conditions, and if the first face detection result meets one or more of the following first conditions, determining that the screen control module does not respond to the first touch event, or if the first face detection result does not meet one or more of the following first conditions, determining that the screen control module responds to the first touch event, wherein
the first condition comprises: there is no face, a face size is less than a first preset size, face stay duration is less than first preset duration, a face orientation deviates from a first preset angle range, or a distance between a face and a screen of the electronic device is greater than or equal to a first preset distance.

7. The electronic device according to any one of claims 4 to 6, wherein an image signal processing module is further deployed on the microprocessor, wherein
the image signal processing module is configured to: preprocess the first image to obtain a preprocessed first image, and send the preprocessed first image to the face detection module; and
the face detection module is specifically configured to: receive the preprocessed first image sent by the image signal processing module, and generate the first face detection result based on the preprocessed first image.

8. The electronic device according to any one of claims 1 to 7, wherein the camera is connected to the microprocessor through a mobile industry processor interface MIPI.

9. A touch processing method, applied to an electronic device, wherein the electronic device comprises a camera and a microprocessor, the camera is connected to the microprocessor, and the method comprises:
capturing, by the camera, a first image;
receiving, by the microprocessor, a first touch event; and
generating, by the microprocessor, a first face detection result based on the first image, and determining, based on the first face detection result, whether the microprocessor responds to the first touch event.

10. The method according to claim 9, wherein the electronic device receives the first touch event when the electronic device is in a screen-off state, and after it is determined, based on the first face detection result, that the microprocessor does not respond to the first touch event, the electronic device retains the screen-off state.

11. The method according to claim 9 or 10, wherein the electronic device further comprises a main processor and a touch sensor, and the receiving, by the microprocessor, a first touch event specifically comprises:
sending, by the touch sensor, information about the first touch event to the main processor; receiving, by the main processor, the information that is about the first touch event and that is sent by the touch sensor, and sending the information about the first touch event to the microprocessor; and receiving, by the microprocessor, the information that is about the first touch event and that is sent by the main processor;
or
sending, by the touch sensor, information about the first touch event to the microprocessor; and receiving, by the microprocessor, the information that is about the first touch event and that is sent by the touch sensor.

12. The method according to any one of claims 9 to 11, wherein one or more modules are deployed on the microprocessor, and the one or more modules comprise a face detection module, a mistouch detection module, and a screen control module, wherein
the generating, by the microprocessor, a first face detection result based on the first image specifically comprises:
generating, by the face detection module, the first face detection result based on the first image; and
the determining, by the microprocessor based on the first face detection result, whether the microprocessor responds to the first touch event specifically comprises:
determining, by the mistouch detection module based on the first face detection result, whether the screen control module responds to the first touch event, and sending a first message to the screen control module, wherein the first message indicates the screen control module to respond to or not to respond to the first touch event; and
receiving, by the screen control module, the first message, and responding to or skipping responding to the first touch event based on the first message.

13. The method according to claim 12, wherein the face detection module comprises a detection module and a camera control module, the detection module is configured to generate and store the first face detection result based on the first image, the camera control module is configured to set a working mode of the camera, and the working mode of the camera comprises an ultra-low power ULP mode.

14. The method according to any one of claims 9 to 13, wherein the determining, by the microprocessor based on the first face detection result, whether the microprocessor responds to the first touch event specifically comprises:
determining, by the microprocessor, whether the first face detection result meets one or more of the following first conditions, and if the first face detection result meets one or more of the following first conditions, determining that the microprocessor does not respond to the first touch event, or if the first face detection result does not meet one or more of the following first conditions, determining that the microprocessor responds to the first touch event, wherein
the first condition comprises: there is no face, a face size is less than a first preset size, face stay duration is less than first preset duration, a face orientation deviates from a first preset angle range, or a distance between a face and a screen of the electronic device is greater than or equal to a first preset distance.

15. The method according to any one of claims 12 to 14, wherein an image signal processing module is further deployed on the microprocessor; the image signal processing module is configured to: preprocess the first image to obtain a preprocessed first image, and send the preprocessed first image to the face detection module; and the generating, by the face detection module, the first face detection result based on the first image specifically comprises:
generating, by the face detection module, the first face detection result based on the preprocessed first image.

16. The method according to any one of claims 9 to 15, wherein the camera is connected to the microprocessor through a mobile industry processor interface MIPI.

17. A computer storage medium, wherein the computer storage medium stores a computer program, the computer program comprises program instructions, and when the program instructions are run on an electronic device, the electronic device is enabled to perform the method according to any one of claims 9 to 16.
